# EUROPEAN PATENT SPECIFICATION

(11) **EP 0 511 422 B1**
(45) Date of publication and mention of the grant of the patent: **28.06.1995**
(21) Application number: 91106969.8
(22) Date of filing: 30.04.1991
(51) Int. Cl.: F25B 9/14, F25B 9/06, F03G 7/00

(54) **Low temperature generation process and expansion engine**
Tieftemperaturerzeugungsverfahren und Expansionsmaschine
Procédé de génération de basse température et machine à expansion

(43) Date of publication of application: 04.11.1992
(73) Proprietor: International Business Machines Corporation, Armonk, N.Y. 10504 (US)
(72) Inventor: Schmidt, Manfred, Dipl.-Phys., W-7036 Schönaich (DE); Blum, Arnold, Dr., Dipl.-Ing., W-7268 Gechingen (DE)
(74) Representative: Schäfer, Wolfgang, Dipl.-Ing.

(56) References cited:
- GB-A- 1 177 651
- US-A- 2 549 464
- US-A- 3 237 421
- US-A- 3 314 244
- US-A- 3 526 099
- US-A- 3 541 801
- US-A- 3 653 225
- US-A- 4 489 553

## Description

### Low Temperature Generation Process and Expansion Engine

The invention relates to a low temperature generation process and to an expansion engine suitable to realize an adiabatic-isothermic refrigerating process. Within a cooling system the expansion engine generally may be used for low temperature generation and especially for the cooling of small electronic devices such as IR detectors.

A minirefrigeration system consisting of heat exchanger, expansion nozzle and condensation chamber is shown in Fig. 28 of "Silicon as a Mechanical Material", K.E. Petersen, Proceedings of the IEEE, Vol.70, No.5, May 1982, page 435-436. This cooling system is micro-mechanically made of silicon and works like a Joule-Thomson Cooler with single-acting throttling as described in "Kryotechnik", W.G.Fastowski et al., page 106, Abb. 34.

It allows the liquefaction of nitrogen at a pressure of more than 100 bar.

The Joule-Thomson Coolers effectively working only at temperatures below 200 K and/or at high pressure (higher than 75 bar), commercial low-temperature machines use the adiabatic-isothermic expansion cycle discussed in "Kryotechnik", W.G.Fastowski et al., chapter 3.9.1., page 175. While expanding, a compressed gas executes external work without heat energy being supplied or carried off . This external work has to be lead away e.g. in form of mechanical or electrical energy and then will be annihilated outside the cold zone.

Normally the expanding working gas drives an expansion turbine, a shown for helium in "Kryotechnik", W.G. Fastowski et al., chapter 3.8., page 173. Expansion machines consisting of pistons, clack valves, paddle wheels and the like are, however, too expensive or may not be realised for use in a miniature refrigeration system.

In "Temperature Separation Produced By A Hartmann-Sprenger Tube Coupling A Secondary Resonator", Int J Heat Mass Transfer Vol 24 No 12 pp 1951-1958, the use of a resonance tube (the Hartmann Sprenger tube) for temperature separation is described. A gas column driven by jet flow is excited to a finite amplitude oscillation accompanying travelling shock waves. Compressed gas issuing from a nozzle and entering into the HS tube is separated into cold gas issuing from the open end of the tube and hot gas discharging through a tiny orifice bored at the end wall of the tube. By coupling a secondary resonator to the resonance tube the thermal effect can be improved.

US-A-3 653 225 discloses a gas-cooling system wherein a pressurized gas jet delivered by an injector across a break in continuity is collected in one or more tubes whose inlet aperture faces the injector and in which the collected gas is pulsated and heated by compressive wave phenomena to a temperature higher than that of the original jet, while impellent gas, removed at the level of the break in continuity via a suitable by-pass, is expanded in relation to the original jet and brought to a lower temperature than the latter.

It is an object of the present invention to provide a simple, reliable and efficient low temperature generation process and a miniature refrigeration system using the adiabatic-isothermic expansion cycle.

Another object of the invention is to provide an expansion engine with no moving parts.

These objects are achieved by the invention as claimed in claims 1 and 4.

In a low temperature generation process compressed gas at high pressure enters from an inlet nozzle and alternately expands into one of two resonator tubes of an expansion engine. The expanding gas excites standing acoustic waves in the resonator tubes. The acoustic energy of the waves is converted into electrical energy by acoustic/electric power converters and lead away outside the cold area.

An expansion engine contains at least two resonator tubes with a common inlet nozzle. Each resonator tube has an acoustic/electric power converter and an exhaust port. Together with a compressor, a heat exchanger and a heat sink the expansion engine provides a very effective cooling system which may be used for the cooling of small electronic devices like chips or modules.

One way of carrying out the invention is described in detail below with reference to drawings which illustrate only specific embodiments, in which:
- Fig. 1: shows a cross-sectional view of the expansion engine and
- Fig. 2: is a cross-sectional view of another embodiment of the expansion engine.

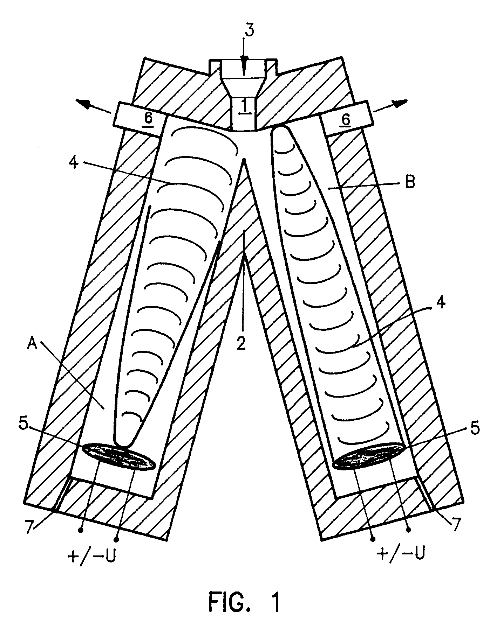

The expansion engine shown in Fig. 1 consists of two resonator tubes A and B. These resonator tubes A,B are arranged symmetrically around a common inlet nozzle 1 in a way that an acute angle is formed between them.

A tip 2 lies opposite to the common inlet nozzle 1. Its shape allows compressed gas 3 entering the common inlet nozzle 1 to expand alternately into one of these two resonator tubes A,B.

The resonator tubes A,B are shaped in a way to allow standing acoustic waves 4 to be excited inside the tubes. Preferably they have the shape of an organ-pipe or of a flute. Their inner walls are extremely smooth to minimize the absorption of acoustic energy by the walls. Thus the conversion of acoustic energy into electrical energy by the acoustic/electric power converters 5 here takes the place of the loss due to friction along the walls.

Each resonator tube A,B has an acoustic/electric power converter 5 situated at the bottom of it and an exhaust port 6.

The amount of the absorbed acoustic energy and thus the efficiency may be increased by a second pair of acoustic/electric power converters situated at the top of each resonator tube.

The exhaust ports 6 are arranged perpendicular to the acoustic pressure to reduce the heatloss caused by acoustic energy dissipation. Thus, more energy is converted into electrical energy by the acoustic/electric power converters 5. These exhaust ports 6 are provided at the same height as the common inlet nozzle 1.

A tiny orifice 7 or hot-gas outlet at the bottom of each resonantor tube A,B leads away the unavoidable amount of residual dissipation thus avoiding warming up the tube walls.

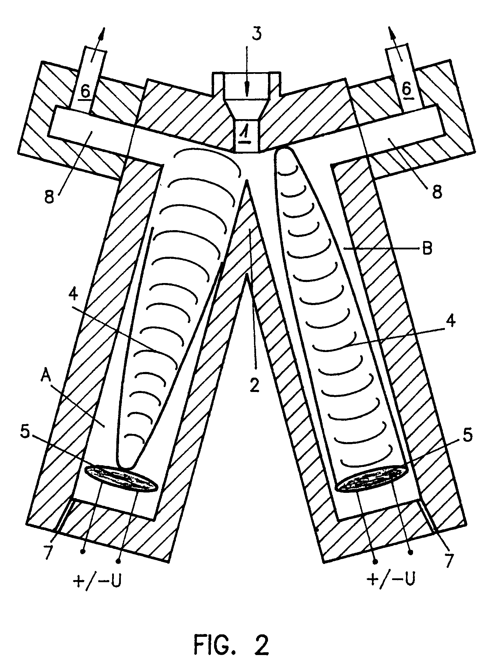

Fig. 2 shows another embodiment of the invention. The expansion engine consists of an additional resonator tube 8 which is substantially perpendicular to these two resonator tubes A,B and which lies at approximately the same height as the common inlet nozzle 1. The additional resonator tube 8 is shaped in a way that it has the same eigenfrequency as the two resonator tubes A,B and the acoustic/electric power converters 5.

The expansion engine may be used in a cooling system which further consists of a compressor, a heat exchanger and a heat sink.

A suitable material for the expansion engine and the whole cooling system comprises silicon and other materials which also may be micromachined using techniques described inter alia by K.Petersen in "Techniques and Applications of Silicon Integrated Micromechanics" in RJ3047 (37942) 2/4/81.

In the low temperature generation process a compressed gas 3 at high pressure enters the expansion engine through inlet nozzle 1. By issuing from the inlet nozzle 1 the compressed gas 3 due to the tip 2 alternately expands into one of the two resonator tubes A,B and thereby excites standing acoustic waves 4 in the tubes. The phase displacement of the waves in the different tubes is about half the acoustic wavelenght.

The acoustic pressure reaches its maximum value at the bottom of the expansion engine where the acoustic/electric power converter 5 is located. The standing acoustic waves 4 are reflected from the acoustic/electric power converter 5 which starts oscillating and converts the acoustic energy into electric energy. Thereby the standing acoustic waves are attenuated. The resonator tubes and the power converter are shaped in a way that they both have the same eigenfrequency.

The acoustic/electric power converter 5 may be a piezo-electric transducer with a mechanical-electrical efficiency of about 0.8.

Higher efficiences may be achieved with electrical/magnetical coupling means principally working like a megaphone.

In summary, the compressed gas expands generating standing acoustic waves, the acoustic energy is converted into electrical energy and lead away. Thus, sort of an expansion engine is realized.

In "Kryotechnik", W.G.Fastowski et al., chapter 3.9, page 177 a gascooling system with two expansion turbines is described. Replacing these expansion turbines by the two resonator tubes of the invention and assuming that all components have the same efficiency provides the following efficiency data:

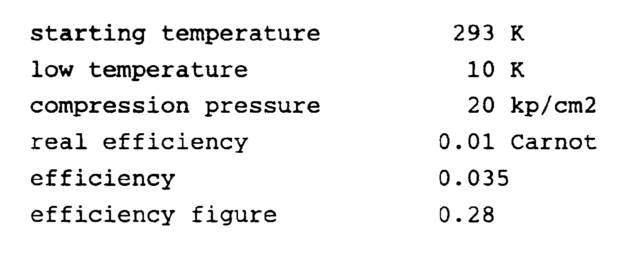

This shows, that using an adiabatic-isothermic expansion process very low temperatures (10 K) may be reached at relative low pressure (20 kp/cm2). Cooling systems with an expansion engine as described and claimed are therefore very useful for generating low temperatures.

## Claims

1. Low temperature generation process comprising the steps
- issuing compressed gas (3) at high pressure from an inlet nozzle (1) and
- alternately expanding said compressed gas (3) into one of two resonator tubes (A,B) of an expansion engine thereby exciting standing acoustic waves (4) in said resonator tubes (A,B)
characterized in that said low temperature generation process further comprises
- converting the acoustic energy of said waves (4) into electrical energy by at least one acoustic/electric power converter (5) and
- leading away the electrical energy outside the cold area.

2. The process of claim 1 wherein said at least one acoustic/electric power converter (5) comprises piezo-electric transducers, whereby said piezoelectric transducers and said standing acoustic waves (4) are oscillating with the same frequency.

3. The process of claim 1 or 2 wherein said standing acoustic waves(4) in said two resonator tubes (A,B) of said expansion engine show phase displacement of about half the acoustic wave-length.

4. Expansion engine containing
- at least two resonator tubes (A,B) having a common inlet nozzle (1), and a shape allowing standing acoustic waves (4) to be excited inside the tubes, and
- means (2) having a shape that allows compressed gas (3) entering said common inlet nozzle (1) to expand alternately into one of said resonator tubes (A, B),
wherein each of said resonator tubes (A, B) has an exhaust port (6),
characterized in that said exhaust port (6) is approximately at the same height as said common inlet nozzle (1) and each of said resonator tubes (A, B) further comprises an acoustic/electric power converter (5) for converting the acoustic energy of said waves (4) into electrical energy.

5. The expansion engine of claim 4 wherein said shape comprising the shape of an organ-pipe or a flute.

6. The expansion engine of claim 4 or 5 wherein said resonator tubes (A,B) are arranged in such a way that an acute angle is formed between them.

7. The expansion engine of one or more of the preceding claims 4 to 6 wherein the inner walls of said resonator tubes (A,B) are extremely smooth.

8. The expansion engine of one or more of the preceding claims 4 to 7 wherein said means (2) comprises
a tip (2) lying opposite to said common inlet nozzle (1).

9. The expansion engine of one or more of the preceding claims 4 to 8 further comprising an additional resonator tube (8) lying substantially perpendicular to said resonator tubes (A,B) and at approximately the same height as said common inlet nozzle (1).

10. The expansion engine of one or more of the preceding claims 4 to 9 wherein said resonator tubes (A,B), said additional resonator tube (8) and said acoustic/electric power converters (5) have the same eigenfrequency.

11. The expansion engine of one or more of the preceding claims 4 to 10 wherein said acoustic/electric power converter (5) is situated at the bottom of each of said resonator tubes (A,B).

12. The expansion engine of one or more of the preceding claims 4 to 11 wherein a second acoustic/electric power converter is situated at the top of each of said resonator tubes (A,B).

13. The expansion engine of one or more of the preceding claims 4 to 12 wherein said acoustic/electric power converters (5) comprise piezoelectric transducers and electrical/magnetical coupling means.

14. The expansion engine of one or more of the preceding claims 5 to 13 wherein said exhaust port (6) of each of said resonator tubes (A,B) is provided substantially perpendicular to the acoustic pressure of said standing acoustic waves (4).

15. The expansion engine of one or more of the preceding claims 4 to 14 wherein said expansion engine is micromechanically made of a material comprising silicon.

16. Cooling system with an expansion engine of one or more of the preceding claims 4 to 15 further comprising
- a compressor
- a heat exchanger and
- a heat sink.

## Patentansprüche

1. Verfahren zur Erzeugung tiefer Temperaturen, das folgende Schritte beinhaltet:
- Ausströmen von komprimiertem Gas (3) bei hohem Druck aus einer Einlaßdüse (1) und
- abwechselndes Expandieren des komprimierten Gases (3) in eines von zwei Resonatorrohren (A, B) einer Expansionsmaschine, wodurch stehende akustische Wellen (4) in den Resonatorrohren (A, B) angeregt werden,
dadurch gekennzeichnet, daß das Verfahren zur Erzeugung tiefer Temperaturen des weiteren folgendes beinhaltet:
- Umwandeln der akustischen Energie der Wellen (4) in elektrische Energie durch wenigstens einen akustisch/elektrischen Leistungswandler (5) und
- Ableiten der elektrischen Energie vom kalten Gebiet nach außen.

2. Verfahren nach Anspruch 1, wobei der wenigstens eine akustisch/elektrische Leistungswandler (5) piezoelektrische Meßwandler beinhaltet, wobei die piezoelektrischen Meßwandler und die stehenden akustischen Wellen (4) mit der gleichen Frequenz oszillieren.

3. Verfahren nach Anspruch 1 oder 2, wobei die stehenden akustischen Wellen (4) in den zwei Resonatorrohren (A, B) der Expansionsmaschine eine Phasenverschiebung von etwa der halben akustischen Wellenlänge zeigen.

4. Expansionsmaschine, die folgendes enthält:
- wenigstens zwei Resonatorrohre (A, B) mit einer gemeinsamen Einlaßdüse (1) und einer Gestalt, welche die Anregung stehender akustischer Wellen (4) innerhalb der Rohre erlaubt, und
- Mittel (2) von einer Gestalt, die es dem komprimierten Gas (3), das in die gemeinsame Einlaßdüse (1) gelangt, erlauben, abwechselnd in eines der zwei Resonatorrohre (A, B) zu expandieren,
wobei jedes der Resonatorrohre (A, B) eine Ausströmöffnung (6) aufweist,
dadurch gekennzeichnet, daß sich die Ausströmöffnung (6) ungefähr auf der gleichen Höhe wie die gemeinsame Einlaßdüse (1) befindet und jedes der Resonatorrohre (A, B) des weiteren einen akustisch/elektrischen Leistungswandler (5) beinhaltet, um die akustische Energie der Wellen (4) in elektrische Energie umzuwandeln.

5. Expansionsmaschine nach Anspruch 4, wobei die Gestalt die Form einer Orgelpfeife oder einer Flöte aufweist.

6. Expansionsmaschine nach Anspruch 4 oder 5, wobei die Resonatorrohre (A, B) derart angeordnet sind, daß zwischen denselben ein spitzer Winkel gebildet ist.

7. Expansionsmaschine nach einem oder mehreren der vorhergehenden Ansprüche 4 bis 6, wobei die inneren Wände der Resonatorrohre (A, B) äußerst glatt sind.

8. Expansionsmaschine nach einem oder mehreren der vorhergehenden Ansprüche 4 bis 7, wobei die Mittel (2) folgendes beinhalten:
eine Spitze (2), die der gemeinsamen Einlaßdüse (1) gegenüberliegt.

9. Expansionsmaschine nach einem oder mehreren der vorhergehenden Ansprüche 4 bis 8, die des weiteren ein zusätzliches Resonatorrohr (8) beinhaltet, das im wesentlichen senkrecht zu den Resonatorrohren (A, B) und ungefähr auf der gleichen Höhe wie die gemeinsame Einlaßdüse (1) liegt.

10. Expansionsmaschine nach einem oder mehreren der vorhergehenden Ansprüche 4 bis 9, wobei die Resonatorrohre (A, B), das zusätzliche Resonatorrohr (8) und die akustisch/elektrischen Leistungswandler (5) die gleiche Eigenfrequenz aufweisen.

11. Expansionsmaschine nach einem oder mehreren der vorhergehenden Ansprüche 4 bis 10, wobei sich der akustisch/elektrische Leistungswandler (5) am Boden jedes der Resonatorrohre (A, B) befindet.

12. Expansionsmaschine nach einem oder mehreren der vorhergehenden Ansprüche 4 bis 11, wobei sich ein zweiter akustisch/elektrischer Leistungswandler am oberen Ende von jedem der Resonatorrohre (A, B) befindet.

13. Expansionsmaschine nach einem oder mehreren der vorhergehenden Ansprüche 4 bis 12, wobei die akustisch/elektrischen Leistungswandler (5) piezoelektrische Meßwandler und elektrisch/magnetische Kopplungsmittel beinhalten.

14. Expansionsmaschine nach einem oder mehreren der vorhergehenden Ansprüche 5 bis 13, wobei die Ausströmöffnung (6) von jedem der Resonatorrohre (A, B) im wesentlichen senkrecht zum akustischen Druck der stehenden akustischen Wellen (4) liegend vorgesehen ist.

15. Expansionsmaschine nach einem oder mehreren der vorhergehenden Ansprüche 4 bis 14, wobei die Expansionsmaschine mikromechanisch aus einem Material gefertigt ist, das Silicium beinhaltet.

16. Kühlsystem mit einer Expansionsmaschine nach einem oder mehreren der vorhergehenden Ansprüche 4 bis 15, das des weiteren folgendes beinhaltet:
- einen Kompressor
- einen Wärmetauscher und
- eine Wärmesenke.

## Revendications

1. Procédé de génération de basse température comprenant les étapes de:
- émettre un gaz comprimé (3) à haute pression à partir d'une buse d'entrée (1) et
- dilater alternativement ledit gaz comprimé (3) dans un de deux tubes résonateurs (A, B) d'une machine à expansion, excitant de ce fait des ondes acoustiques stationnaires (4) dans lesdits tubes résonateurs (A, B),
caractérisé en ce que ledit procédé de génération de basse température comprend en outre:
- convertir l'énergie acoustique desdites ondes (4) en énergie électrique à l'aide d'au moins un convertisseur d'énergie acoustique/électrique (5), et
- dégager l'énergie électrique hors de la zone froide.

2. Procédé selon la revendication 2, dans lequel ledit au moins un convertisseur d'énergie acoustique/électrique (5) comprend des transducteurs piézo-électriques, ce qui fait que lesdits transducteurs piézo-électriques et lesdites ondes acoustiques stationnaires (4) oscillent à la même fréquence.

3. Procédé selon les revendications 1 ou 2, dans lequel lesdites ondes acoustiques stationnaires (4) dans lesdits deux tubes résonateurs (A, B) de ladite machine à expansion montrent un déphasage d'environ la moitié de la longueur d'onde acoustique.

4. Machine à expansion contenant:
- au moins deux tubes résonateurs (A, B) ayant une buse d'entrée commune (1), et une forme permettant aux ondes acoustiques stationnaires (4) d'être excitées à l'intérieur des tubes, et
- un moyen (2) ayant une forme qui permette au gaz comprimé (3) d'entrer dans ladite buse d'entrée commune (1) pour se dilater alternativement dans l'un desdits tubes résonateurs (A, B),
dans laquelle chacun des tubes résonateurs (A, B) a un orifice d'échappement (6),
caractérisée en ce que ledit orifice d'échappement (6) est approximativement à la même hauteur que ladite buse d'entrée commune (1), et chacun desdits tubes résonateurs (A, B) comprend en outre un convertisseur d'énergie acoustique/électrique (5) pour convertir l'énergie acoustique desdites ondes (4) en énergie électrique.

5. Machine à expansion selon la revendication 4, dans laquelle ladite forme est la forme d'un tuyau d'orgue ou d'une flûte.

6. machine à expansion selon les revendications 4 ou 5, dans laquelle lesdits tubes résonateurs (A, B) sont agencés de manière à ce que soit formé un angle aigu entre eux.

7. Machine à expansion selon une ou plusieurs des revendications précédentes 4 à 6, dans laquelle les parois internes desdits tubes résonateurs (A, B) sont extrêmement lisses.

8. Machine à expansion selon une ou plusieurs des revendications précédentes 4 à 7, dans laquelle ledit moyen (2) comprend:
une pointe (2) placée en opposition à ladite buse d'entrée commune (1).

9. Machine à expansion selon une ou plusieurs des revendications précédentes 4 à 8, comprenant en outre un tube résonateur supplémentaire (8) étant sensiblement perpendiculaire auxdits tubes résonateurs (A, B) et à approximativement la même hauteur que ladite buse d'entrée commune (1).

10. Machine à expansion selon une ou plusieurs des revendications précédentes 4 à 9, dans laquelle lesdits tubes résonateurs (A, B), ledit tube résonateur supplémentaire (8) et lesdits convertisseurs d'énergie acoustique/électrique (5) ont la même fréquence propre.

11. Machine à expansion selon une ou plusieurs des revendications précédentes 4 à 10, dans laquelle ledit convertisseur d'énergie acoustique/électrique (5) est situé en bas de chacun desdits tubes résonateurs (A, B).

12. Machine à expansion selon une ou plusieurs des revendications précédentes 4 à 11, dans laquelle un deuxième convertisseur d'énergie acoustique/électrique est situé en haut de chacun desdits tubes résonateurs (A, B).

13. Machine à expansion selon une ou plusieurs des revendications précédentes 4 à 12, dans laquelle lesdits convertisseurs d'énergie acoustique/électrique (5) sont constitués de transducteurs piézo-électriques et d'un moyen de couplage électrique/magnétique.

14. Machine à expansion selon une ou plusieurs des revendications précédentes 5 à 13, dans laquelle ledit orifice d'échappement (6) de chacun deedits tubes résonateurs (A, B) est ménagé sensiblement perpendiculairement à la pression acoustique desdites ondes acoustiques stationnaires (4).

15. Machine à expansion selon une ou plusieurs des revendications précédentes 4 à 14, dans laquelle ladite machine à expansion est micromécaniquement faite dans un matériau de silicium.

16. Système de refroidissement avec une machine d'expansion selon une ou plusieurs des revendications précédentes 4 à 15, comprenant en outre:
- un compresseur,
- un échangeur de chaleur, et
- un élément de dissipation de chaleur.
